# EUROPEAN PATENT SPECIFICATION

(11) **EP 0 867 113 B1**
(45) Date of publication and mention of the grant of the patent: **29.05.2002**
(21) Application number: 98830086.9
(22) Date of filing: 20.02.1998
(51) Int. Cl.: A01K 31/00, B65D 85/50, B65D 21/02

(54) **Cage for transporting poultry**
Geflügeltransportbehälter
Cage de transport pour volaille

(30) Priority: 12.03.1997 IT TO970052 U
(43) Date of publication of application: 30.09.1998
(73) Proprietor: GIORDANO POULTRY-PLAST S.p.A., I-12023 Caraglio (Cuneo) (IT)
(72) Inventor: Giordano, Osvaldo, 12023 Caraglio (Cuneo) (IT)
(74) Representative: Buzzi, Franco

(56) References cited:
- EP-A- 0 068 576
- EP-A- 0 069 419
- CH-A- 667 774
- DE-U- 8 607 676
- GB-A- 2 129 672

## Description

The present invention is related to cages for transporting live poultry, of the type comprising one single body of moulded plastic material having a generally quadrangular shape, open superiorly and including lateral walls and a bottom wall having a grid-like configuration, and designed inferiorly so as to be selectively superimposed in stacked condition to same cages or releasably fitted in a drawer fashion into a support framework.

Cages for transporting live poultry of the above-referenced type are known, for instance, from Italian utility model application No. 53382-B/81 in the name of the same Applicant, as well as from GB-B-2.129.672 and US-A-4.998.967.

When handling and displacing these cages, which normally have a relevant size, problems are experienced in connection with structural integrity thereof. In particular, since the vertical corners comprised between adjacent lateral walls of the conventional cages are traditionally made as sharp edges, i.e. forming an angle of substantially 90°, in case of impacts these corners are easily subjected to breakage which requires replacement of the cages, with the costs involved thereby.

EP-A-0068576 discloses a plastic material container formed at the corners between the lateral walls with integral enlarged members having a tubular configuration each with two straight portions extending at right angles from a generally rounded corner. This construction does not not provide an effective solution to the above-referenced problem.

A further drawback of the traditional cages resides in that the grid-like arrangement of the bottom wall is as a rule formed by quadrangular apertures formed over the entire surface of the bottom wall, in very close proximity to one another. With such an arrangement the poultry loaded and crowded within the cage is subjected to serious risks of claw injury.

The object of the present invention is to overcome the above drawbacks, and to provide a cage for live poultry transportation of the type set forth in the above having a remarkably more sturdy and resistant structure.

A further object of the invention is to provide a cage for live poultry transportation of the above-referenced type which is designed so as to reduce the risks of injury for the livestock in use housed therein.

According to the primary feature of the invention, at the corners between the lateral walls the cage body is formed with integral enlarged members having a generally rounded design, each of which includes a convex, smooth and continuous outer wall.

This outer convex wall conveniently projects outwardly with respect to the planes of the related lateral walls forming the corner, and has preferably a tubular configuration.

By virtue of this construction, should the cage corners be subjected to even violent strokes, the rounded enlarged members shall enable sliding thereof over the impact surface, instead of stumbling thereagainst, thus drastically reducing any negative effects. Moreover, due to the fact that the outer convex wall of the enlarged corner members is protruding outwardly with respect to the planes of the lateral walls, integrity of the walls themselves is safeguarded even in case of front or lateral crash of the cage.

According to another feature of the invention, the grid-like configuration of the cage bottom wall is defined by a number of small circular holes. Accordingly, due to the absence of corners over the apertured bottom wall, the risks of traumas and injuries of the poultry claws during handling and transporting thereof within the cage are appreciably reduced. Furthermore this arrangement of the bottom wall provides a greater trampling surface for the poultry, as compared with the traditional cages whose bottom wall is formed with quadrangular openings, and also improves washing convenience of the cage when cleaning thereof is required.

According to a further feature of the invention the cage bottom wall is formed with longitudinal and transverse mutually crossing lower ribs defining, along a pair of opposite lateral walls of the cage, respective slanting surfaces. This arrangement makes easier loading and unloading of the cages when they are employed in the drawer mode with an associated support framework.

The invention will now be disclosed in detail with reference to the accompanying drawings purely provided by way of non limiting example, in which:

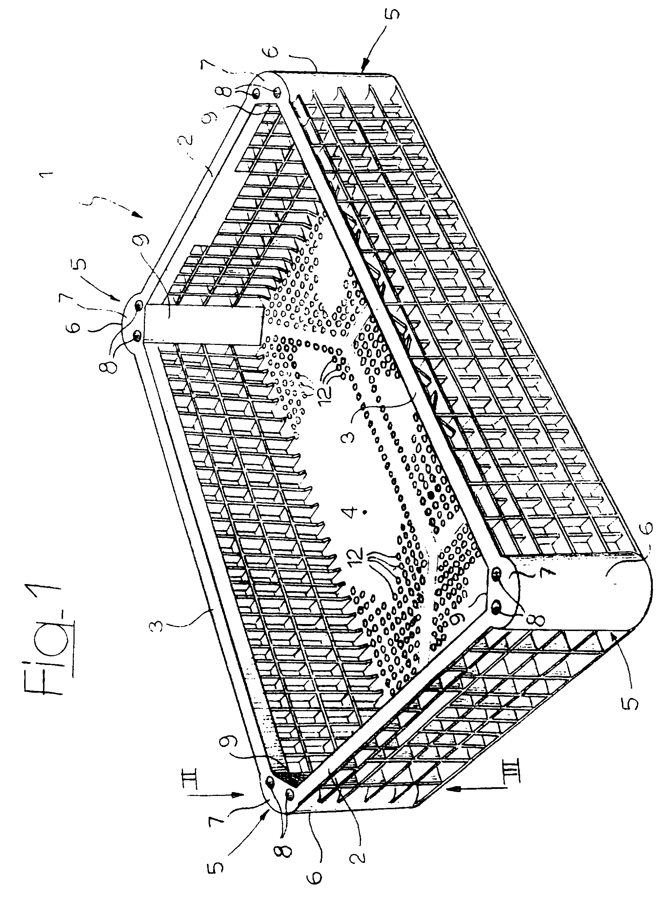

- figure **1** is a diagrammatic perspective view of a cage for transporting poultry according to the invention,
- figure **2** is a top plan and enlarged view of the particular shown by arrow II in figure 1,
- figure **3** is a bottom plan and enlarged view of the particular indicated by arrow III in figure 1, and
- figure **4** is a sectioned and enlarged view along line IV-IV of figure 3.

In the drawings, reference numeral 1 generally designates a cage according to the invention for transporting live poultry, formed by one single body of moulded plastic material.

The cage 1 has a generally quadrangular, normally rectangular, coop-like design, and is open upwardly i.e. without cover. Accordingly the cage comprises two opposite smaller lateral walls 2, two opposite larger lateral walls 3, and a bottom wall 4. The lateral walls 2, 3 have a grid-like configuration defined by mutually crossing vertical and horizontal ribs formed by moulding.

According to one of the peculiar features of the invention, each lateral wall 2, 3 is joined to the respective adjacent lateral wall 3, 2 not through a 90° sharp corner, as in the case of conventional cages of the same type, but instead by means of an integral enlarged member having a generally rounded design, designated as 5.

Each enlarged member 5 is oriented perpendicularly to the bottom wall 4 along the entire height of the cage 1 and has an outer convex wall 6 of circular or elliptical-arc cross section and with a continuos and smooth surface.

Moreover, and as better depicted in figures 2 and 3, each enlarged member 5 has a tubular conformation, lowerly open and upperly closed by a wall 7 formed integrally with and at the same level of the upper edges of the lateral walls 2, 3. Two vertical bores 8 communicating with the cavity of the enlarged member 5 are provided in the upper wall 7.

The inner vertical wall of each enlarged member 5, i.e. the one opposite to the convex wall 6 and designated as 9, is planar and is arranged with respect to the corresponding lateral walls 2, 3 obliquely, i.e. forming angles greater than 90°. The inner walls 9 thus provide inner inclined connections between the lateral walls 2, 3.

As shown in detail in figure 3, each tubular enlarged member 5 is further formed innerly with an intermediate vertical baffle 10 and with vertical ribs 11: by virtue of such a construction, the enlarged members 5 are provided with remarkable resistance and structural strength.

The bottom wall 4 has a grid-like configuration defined by a number of small holes 12 which, according to another unique feature of the invention, have a circular design instead of a quadrangular shape as in the case of the traditional cages. The circular holes 12 may be provided either over the entire surface of the bottom wall 4, or only at limited set areas thereof.

Moreover the circular holes 12 are relatively spaced apart from one another, whereby the solid trampling surface of the bottom wall 4 is appreciably greater than in the case of conventional cages, while making washing of the cage for cleaning thereof remarkably easier.

Furthermore the lower surface of the bottom wall 4 is integrally formed with mutually crossing longitudinal and transverse ribs 13, 14 defining all together a downward projection 15 whose outline substantially corresponds to the inner upper rim of the cage 1. This projection 15 enables fitting the cage 1 into the top of an identical cage 1 so as to provide a superimposed stacked configuration in which each cage 1 is closed superiorly by the cage 1 placed above.

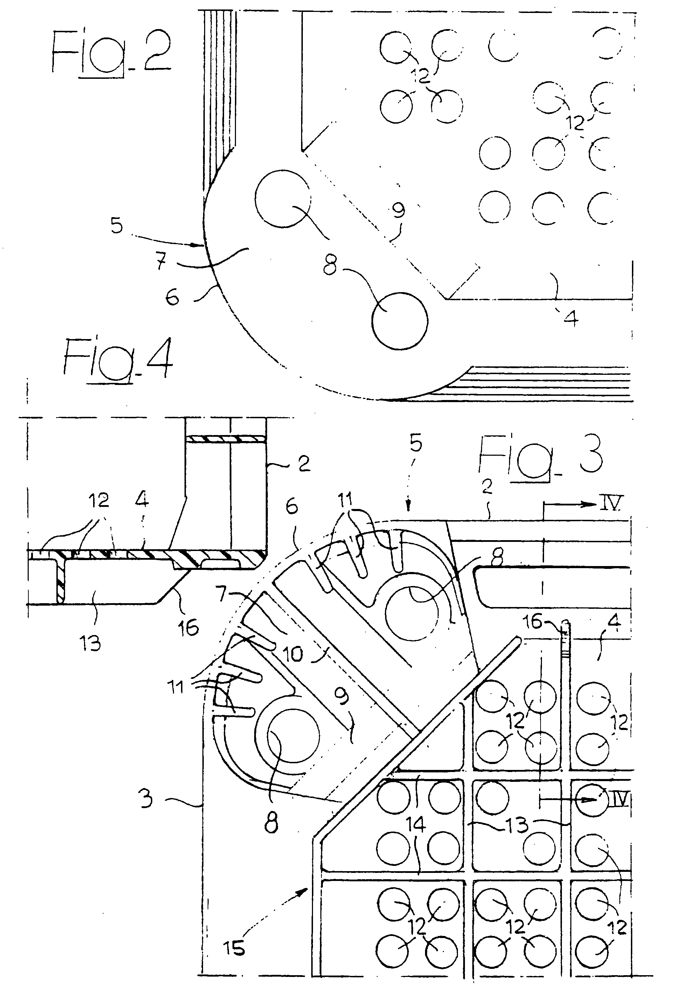

In alternative, the lower projection 15 may be employed to releasably fit the cage 1, in a drawer fashion into a support framework of a conventional type, which is employed for collective transportation and handling of a plurality of cages 1. In this case, to the aim of making withdrawal of the cage 1 from the support framework easier, the lower projection 15 can be shaped, along two opposite sides for instance corresponding to the smaller lateral walls 2 of the cage 1, with slanting surfaces. In the case of the shown example, these slanting surfaces are defined by the opposite ends of the longitudinal ribs 13 which are bevelled for instance at 45°, as shown by 16 in figures 3 and 4.

By way of example, the size of the cage 1 according to the invention can be as follows: length = 1160 mm; width = 770 mm; height = 255 or 355 mm.

It will be apparent from the above disclosure that the cage 1 according to the invention provides, as compared with conventional cages of the same type, the following relevant advantages:
- greater strength and resistance to collisions, with a remarkable reduction of risks of breakage in use and, consequently, with a remarkably longer operation life;
- appreciable reduction of injury, wound and stress of the poultry housed in the cage,
- washing ease and convenience when cleaning the cage,
- stacking practicalness when superimposing the cages to one another,
- easy loading and unloading when employing the cage in a drawer fashion together with a support framework.

Naturally the details of construction, the embodiments and the size of the cage may be widely varied with respect to what has been disclosed and illustrated, without thereby departing from the scope of the present invention, such as defined in the appended claims.

## Claims

1. Cage for the transportation of poultry, comprising one single body of moulded plastic material (1) having a generally quadrangular shape, open superiorly and including lateral walls (2, 3) and a bottom wall (4) having a grid-like configuration, and designed inferiorly so as to be selectively superimposed in a stacked condition with same cages or releasably fitted in a drawer fashion into a support framework, wherein at the corners between said lateral walls (2, 3) said body (1) is formed with integral enlarged members (5) having a tubular configuration and a generally rounded design, **characterized in that** each integral enlarged member (5) includes a convex, smooth and continuous outer wall (6) and is open inferiorly and closed superiorly by a wall (7) provided with through holes (8).

2. Cage according to claim 1, **characterized in that** said outer convex wall (6) projects outwardly with respect to the planes of the related lateral walls (2, 3) forming the corner.

3. Cage according to claim 1, **characterized in that** each integral enlarged member (5) further includes an inner planar wall (9) obliquely connecting the related lateral walls( 2, 3).

4. Cage according to claims 3, **characterized in that** each integral tubular member (5) is formed with integral inner stiffening ribs (10, 11).

5. Cage according to any of the preceding claims, **characterized in that** the grid-like configuration of the bottom wall (4) is defined by a number of small circular holes (12).

6. Cage according to any of the preceding claims, **characterized in that** said bottom wall (4) is formed with longitudinal and transverse mutually crossing lower ribs (13, 14) defining a quadrangular appendage (15) projecting downwardly and having at least two opposite ends formed by respective slanting surfaces (16).

## Patentansprüche

1. Geflügeltransportbehälter, der ein einziges Gehäuse aus geformtem Kunststoffmaterial (1) mit einer im wesentlichen viereckigen Form enthält, der oben offen ist und der Seitenwände (2, 3) und eine Bodenwand (4) mit einer Gitter-artigen Konfiguration einschließt und der unten gestaltet ist, so daß er selektiv in einem gestapelten Zustand mit den gleichen Behältern übereinandergelegt oder in einer Schubladen-Art in einem Stützrahmentragwerk lose befestigt ist, bei dem an den Ecken zwischen den Seitenwänden (2, 3) das Gehäuse (1) mit integralen, vergrößerten Elementen (5) mit einer röhrenförmigen Konfiguration und einer im allgemeinen abgerundeten Form gebildet ist, **dadurch gekennzeichnet, daß** jedes integrale, vergrößerte Element (5) eine konvexe, glatte und kontinuierliche Außenwand (6) einschließt und unten offen und oben durch eine Wand (7) geschlossen ist, die mit Durchgangslöchern (8) ausgestattet ist.

2. Behälter gemäß Anspruch 1, **dadurch gekennzeichnet, daß** die konvexe Außenwand (6) in Bezug auf die Flächen der zusammenhängenden, die Ecke bildenden Seitenwänden (2, 3) nach außen hin herausragt.

3. Behälter gemäß Anspruch 1, **dadurch gekennzeichnet, daß** jedes integrale, vergrößerte Element (5) ferner eine ebene Innenwand (9) einschließt, die die verbundenen Seitenwände (2, 3) schräg verbindet.

4. Behälter gemäß Anspruch 3, **dadurch gekennzeichnet, daß** jedes integrale, röhrenförmige Element (5) mit integralen, inneren Versteifungsrippen (10, 11) gebildet ist.

5. Behälter gemäß irgendeinem der vorstehenden Ansprüche, **dadurch gekennzeichnet, daß** die Gitter-artige Konfiguration der Bodenwand (4) durch eine Anzahl von kleinen, kreisförmigen Löchern (12) definiert ist.

6. Behälter gemäß einem der vorstehenden Ansprüche **dadurch gekennzeichnet, daß** die Bodenwand (4) mit longitudinalen und transversalen gegenseitig kreuzenden, tieferliegenden Rippen (13, 14) gebildet ist, die einen viereckigen Fortsatz (15) definieren, der nach unten herausragt und mindestens zwei gegenüberliegende Enden hat, die durch jeweilige schiefe Oberflächen (16) gebildet werden.

## Revendications

1. Cage pour le transport de volailles, comprenant un corps unique de matière plastique moulée (1) ayant une forme générale quadrangulaire, ouverte vers le haut et possédant des parois latérales (2, 3) et une paroi inférieure (4) ayant une configuration de grille, et réalisée à sa partie inférieure afin qu'elle puisse être sélectivement superposée à des cages analogues à l'état empilé ou logée de façon amovible à la manière d'un tiroir dans un bâti de support, dans laquelle, aux coins entre les parois latérales (2, 3), le corps (1) a des organes solidaires élargis (5) ayant une configuration tubulaire et une forme arrondie de façon générale, **caractérisée en ce que** chaque organe élargi solidaire (5) possède une paroi externe continue, convexe et lisse (6) et est ouvert à la partie inférieure et fermé à la partie supérieure par une paroi (7) ayant des trous débouchants (8).

2. Cage selon la revendication 1, **caractérisée en ce que** la paroi convexe externe (6) dépasse à l'extérieur des plans des parois latérales associées (2, 3) formant le coin.

3. Cage selon la revendication 1, **caractérisée en ce que** chaque organe élargi solidaire (5) comporte en outre une paroi interne plane (9) reliant obliquement les parois latérales associées (2, 3).

4. Cage selon la revendication 3, **caractérisée en ce que** chaque organe tubulaire solidaire (5) est réalisé avec des nervures internes solidaires de rigidification (10, 11).

5. Cage selon l'une quelconque des revendications précédentes, **caractérisée en ce que** la configuration de grille de la paroi inférieure (4) est délimitée par un certain nombre de petites roues circulaires (12).

6. Cage selon l'une quelconque des revendications précédentes, **caractérisée en ce que** la paroi inférieure (4) est formée avec des nervures inférieures longitudinales et transversales (13, 14) qui se recoupent mutuellement et qui délimitent un organe quadrangulaire (15) dépassant vers le bas et ayant au moins deux extrémités opposées formées par des surfaces respectives inclinées (16).
